# EUROPEAN PATENT APPLICATION

(11) **EP 1 978 577 A1**
(43) Date of publication of application: **08.10.2008**
(21) Application number: 07105802.8
(22) Date of filing: 05.04.2007
(51) Int. Cl.: H01M 2/00, H01M 10/46, H02J 7/00

(54) **Battery having a plurality of cells, battery arrangement, power tool, and method of balancing voltage levels of cells of this battery**

(71) Applicant: Ferm B.V., 8028 PM Zwolle (NL)
(72) Inventor: Woelders, Niels Jacob, 200081 Shanghai (CN)
(74) Representative: Viering, Jentschura & Partner

(57) **Abstract**

The invention defines a battery, a battery arrangement therewith, a power tool comprising the battery, and a method of balancing voltage levels of a plurality of cells of the battery. The battery comprises a plurality of cells connected in series, wherein each of the cells is connected to a voltage measuring means for measuring a voltage level of the corresponding cell and a voltage controller means for controlling the voltage level of the corresponding cell. A controller is connected to the plurality of voltage measuring means and the plurality of voltage controller means such as to balance the measured voltage levels of the cells by respectively controlling the voltage controller means.

## Description

The invention is directed to a battery having a plurality of cells, a battery arrangement therewith, a power tool applying this battery, and a method of balancing voltage levels of cells of this battery.

Many small electrical appliances, such as power tools, are driven by batteries such that one can get rid of electrical power lines and thus have a better mobility. However, batteries often contain a plurality of heavy metals which can cause environmental damages. Therefore, very often rechargeable batteries are used that can be recharged by a charger device with electrical energy. Thus, the amount of disposed batteries can be reduced very effectively by applying rechargeable batteries.

In most cases, batteries which will be applied for example in power tools are constituted of a plurality of single cells. When recharging and discharging the battery, i.e. these cells, the voltage levels of each of the cells have to be monitored and balanced such that the cells always have the same voltage. Balancing of the cells is important in terms of maintaining the longest possible life time thereof. Also discharging a cell below a certain level can cause damage or will at least lead to a reduction of life time of the cell. If a cell does not function properly any more a continued charging process could even cause overheating or an explosion of the cell. As the electrical capacity of each of the cells will be the same, each of the cells will have the same electrical charge.

For monitoring and balancing the cells of a battery, batteries often comprise an integrated circuit (IC). To perform this task, accordingly adapted integrated circuits are known. However, these known ICs are adapted to monitor and balance only up to four cells. Therefore, conventional batteries only comprise up to four cells connected in series. In the case of power tools, batteries having more than four cells will be appreciable since the overall amount of electrical energy storable in a battery depends on the number of cells contained in the battery. Therefore, e.g. power tools will be more powerful and/or batteries have to be less often recharged, if the batteries will comprise a higher number of cells. However, in the case, where more than four cells will be needed, also more than one IC will be needed. Since these ICs are expensive, batteries having more than one IC will be also expensive. Therefore, there is a problem that rechargeable batteries storing a high amount of electrical energy, e.g. for power tools, will be expensive since a plurality of ICs will be needed in the case of a battery comprising more than four cells.

Therefore, it is an object of the invention to provide a solution for a battery having a plurality of cells, overcoming the above-mentioned problems.

According to the invention, this problem will be solved by a battery having a plurality of cells connected in series, each of said cells being connected to a voltage measuring means for measuring a voltage level of said corresponding cell, and a voltage controller means for controlling said voltage level of said corresponding cell, wherein a controller is connected to said plurality of voltage measuring means and said plurality of voltage controller means such as to balance said measured voltage levels of said cells by respectively controlling said voltage controller means.

In simple words, there is provided a rechargeable battery having a plurality of cells connected in series, wherein the voltage of every cell is detected and at least one electronic device is controlled to balance the measured voltages of every cell. This task may be performed by a conventional programmable integrated circuit (IC.). Since such a programmable IC is very cheap, the battery using such a conventional IC is cheaper than a battery having two or more specialized ICs. On the other hand, a rechargeable battery according to the invention may comprise more cells than a conventional battery. When operating, the voltage levels of each of the plurality of cells will be measured. Subsequently, it will be determined by the IC, which one of the plurality of cells has a lower voltage than the other cells. Subsequently electronic devices allocated to the other cells having higher voltages will be controlled such as to reduce the voltage of these other cells to the voltage level of the cell or cells having the lower voltage. Therefore, a rechargeable battery is provided having a plurality of cells, especially more than four cells, wherein the voltage levels of all cells of the battery are balanced.

In another embodiment of the battery according the present invention, each of said voltage controller means comprises an electronic device. Preferable the electronic device can be a bipolar transistor, a field effect transistor (FET) or another electronic component allowing similar switching operations. In a preferred embodiment the device is realized as a field effect transistor connected to a corresponding cell in parallel and a gate terminal of said field effect transistor connected to said controller.

In an even further preferred embodiment of the battery according to the present invention, said field effect transistor is a metal-oxide field effect transistor.

In a further embodiment of the battery according to the present invention, said controller is a programmable integrated circuit. In another embodiment of the battery according to the present invention, said controller is a microcontroller. In still another embodiment of the battery according to the present invention, said controller is kept partly in sleep mode, when said voltage levels of said cells are balanced. The controller will more preferred be in an active mode when charging a cell as part of the balancing procedure.

In a further embodiment of the battery according to the present invention, said plurality of cells are Li-Ion cells, Li-polymer, Li-phosphate or other Li-based materials to be used for electrochemical cells.

Preferably the voltage measuring means comprises a filtering means, which can for example be realised as a Zener diode or as a Schottky diode.

In an embodiment of the battery according to the present invention, said controller is included in the battery.

In another embodiment of the battery according to the present invention, a further controller is included in the battery. Balancing of the voltage levels of the cells can then be performed by entirely using the further controller. Additionally both controllers can be used cooperatively to balance the voltage levels of the cells. The controller and/or the further controller can be realised as a processor or as a programmable integrated circuit.

Both of said controllers are adapted to monitor the cells preferably on a one by one basis to always keep every single cell being operated within the corresponding specifiaction. If a cell is driven out of its specification the controller inventively reacts directly or indirectly by either amending the charging or discharging conditions immediately.

In an embodiment, where the programmable IC is implemented in the battery pack, the programmable IC is connected to another programmable IC controlling the tool and both programmable ICs communicate with each other. Therefore, no high-power transistors will be needed in the battery pack and power losses as well as costs may be saved.

The invention also provides a battery arrangement, which arrangement comprises a battery with a plurality of cells connected in series, each of said cells being connected to a voltage measuring means for measuring a voltage level of said corresponding cell, and a voltage controller means for controlling said voltage level of said corresponding cell, and which arrangement comprises a controller being connected to said plurality of voltage measuring means and said plurality of voltage controller means such as to balance said measured voltage levels of said cells by respectively controlling said voltage controller means.

The battery of the arrangement can have one or more of the features of the battery described above. In an embodiment of the arrangement the battery can include a further controller. Then the controller and/or the further controller can be used to balance said voltage levels of said cells.

According to another aspect of the invention, a power tool comprises a battery having any of the foregoing features. The invention also provides a power tool comprising the above identified battery arrangement.

Therefore, according to the invention, the above mentioned problem is solved by a power tool comprising a battery according to one of the claims 1 to 12.

In another embodiment of the power tool according to the present invention, a further controller is comprised in the power tool. Inventively said further controller can be used for the above mentioned balancing operations in the battery. Also the additional controller included in the battery may be used cooperatively for balancing the voltage levels of the cells.

Also, according to the invention, the above mentioned problem is solved by a method of balancing voltage levels of a plurality of cells of a battery, comprising the steps of measuring said voltage levels of each of said plurality of cells, selecting a lowest voltage level of said measured voltage levels, controlling a plurality of voltage controller means connected to said cells, respectively, such that said voltage levels of said plurality of cells will be equal to each other.

Finally, in a further embodiment of the method according to the present invention, the voltage levels of said plurality of cells are measured one by one.

Embodiments of the invention are illustrated in the figures and will be further explained.
FIG. 1 illustrates a block diagram of an embodiment of the invention showing a battery having two cells;
FIG. 2 shows a circuitry for balancing a battery according to the invention; and
FIG. 3 shows a inventive circuitry for balancing cells of a battery comprising four cells.

In the figures, embodiments of the present invention are shown for explanatory and exemplary purposes only. Particularly, the figures are not to scale. The same elements of the embodiments of the present invention will have the same reference signs throughout the description where possible.

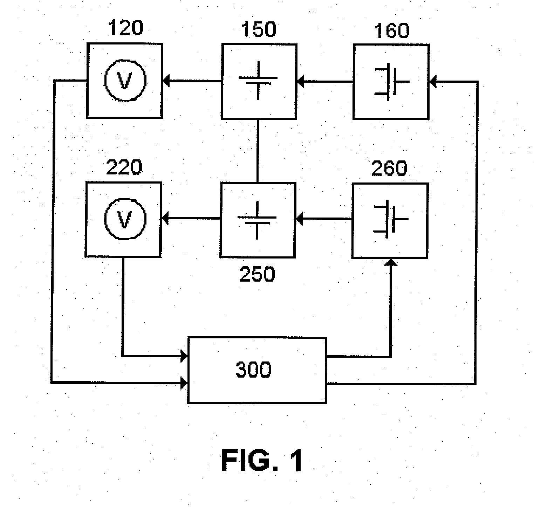

As can be seen from FIG. 1 the battery comprises a first cell 150 and a second cell 250, which are connected in series to each other. Further, the battery comprises a first voltage measuring device 120 connected to the first cell 150 and a second voltage measuring device 250 connected to the second cell 220 for measuring the voltage level of each cell, respectively. Both, first and second voltage measuring device 120 and 220 are each also coupled to a programmable integrated circuit (IC) 300 for transmitting the measured voltage levels thereto. The measured voltage levels may be input in the programmable IC 300 via respective analog-to-digital-converters (not shown). The battery also comprises a first voltage controlling device 160 connected to the first cell 150 and a second controlling device 260 connected to the second cell 250. The first and the second voltage controlling devices 160 and 260, respectively are connected to the programmable IC 300 and are controlled by the programmable IC 300 based on the measured voltage levels such as to balance the respective voltage levels of said cells 150 and 250.

Especially, the programmable IC may be a programmable intelligent controller (PIC), a microcontroller, a programmable logic device (PLD), a field-programmable gate array (FPGA) or any other device capable of receiving a plurality of voltage signals and outputting control signals such as to balance out voltage levels of said cells. The programmable IC is supplied with energy by the battery. The cells may be Li-Ion-Cells, thus, forming a Li-Ion-Battery, e.g. for a laptop.

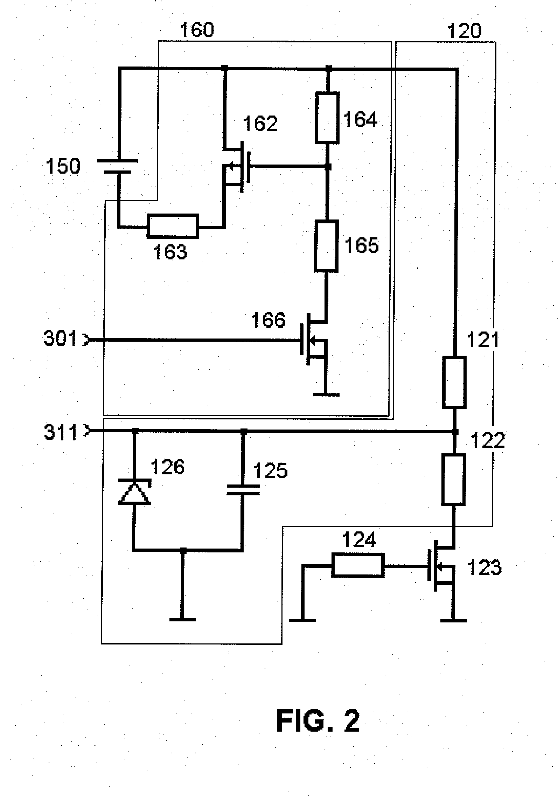

FIG. 2 shows an embodiment of a voltage measuring device and a voltage controlling device according to an embodiment of the invention.

For clarity, FIG. 2 shows a battery having only one cell. As can be seen from FIG. 2, the cell 150 is connected to a drain contact of a first transistor 162, and a first terminal of a first resistor 163. Especially, the positive voltage contact of the cell 150 is connected to the drain contact of the first transistor 162, and a negative voltage terminal of the cell 150 is connected to the first terminal of the first resistor 163. A second terminal of the first resistor 163 is connected to a source contact of the first transistor 162. A second resistor 164 is connected between the drain contact and a gate contact of the first transistor 162. A third resistor 165 is connected to the gate contact of the first transistor 162 and a drain contact of a second transistor 166, while the source contact of the second transistor 166 is connected to ground potential. A gate contact of the second transistor 166 is connected to an output terminal 301 of a programmable IC (not shown). Therefore, the second resistor 164 and the third resistor 165 form a voltage divider, the middle thereof being connected to the gate contact of the first transistor 162. The first and second transistors 162, 166, and the first to third resistors 163, 164 and 165 form a voltage controlling device 160.

A positive voltage terminal of the cell 150 is also connected to a first contact of a fourth resistor 121. The second terminal of the fourth resistor 121 is connected to a first contact of a fifth resistor 122, a first contact of a capacitor 125, a cathode terminal of a Zener diode 126, and to an analog-digital converter input 311 of the programmable IC (not shown). A second contact of the fifth resistor 122 is connected to a drain contact of a third transistor 123, and a source contact of the third transistor 123 is connected to ground potential. A gate contact of the third transistor 123 is connected to a first contact of a sixth resistor 124 and a second contact of the sixth resistor 124 is also connected to ground potential. A second contact of the capacitor 125 and an anode terminal of the Zener diode 126 are both connected to ground potential. Thus, a voltage measuring device 120 is formed by the fourth and fifth resistors 121, 122, the capacitor 125, and the Zener diode 126. However, it may be noted that a voltage divider formed from the fourth resistor 121 and the fifth resistor 122 is not necessary for proper operation of the voltage measuring device.

The transistors may be bipolar transistors or unipolar transistors, e.g. field effect transistors (FET). Preferably, metal-oxide field effect transistors (MOS-FET) will be applied. In FIG. 2 the first transistor 162 is a p-MOS-FET, and the second and third transistors 166, 123 are n-MOS-FETs.

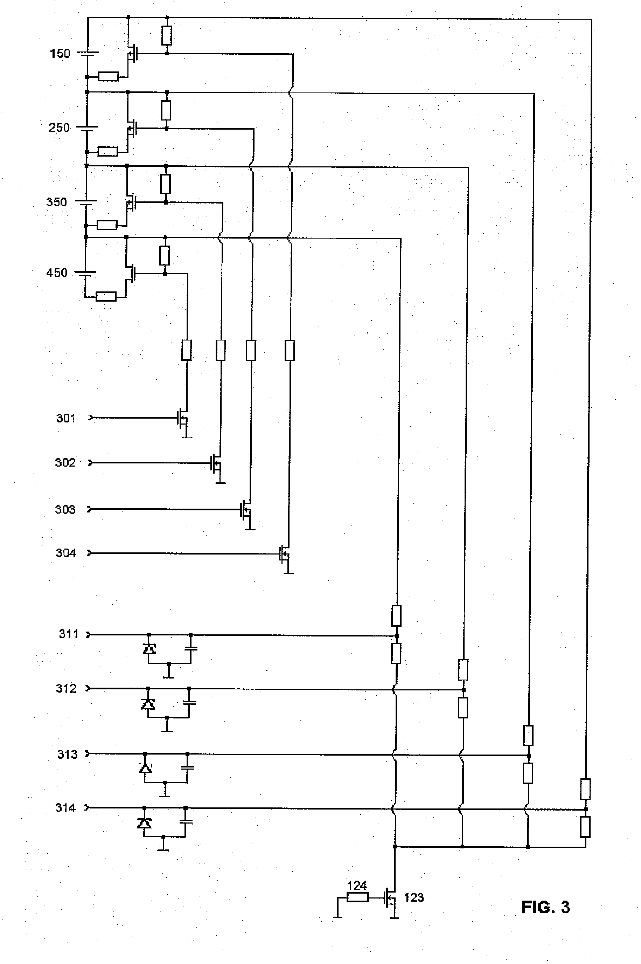

The battery device as shown in FIG. 3 will be achieved by serially connecting cells 150, 250, 350, and 450, which are connected to voltage measuring devices and voltage controlling devices as shown in FIG. 2. That is, the battery having a plurality of cells may be achieved by connecting a positive voltage contact of a cell to a negative voltage contact of a second cell. Additional cells may be added correspondingly, wherein the number of added cells will be limited only by the number of analog-digital-converters, i.e. voltage-measuring-inputs of the programmable IC (not shown). Voltage-measuring-inputs 311, 312, 313, and 314 are shown in FIG. 3. Voltage dividers of the voltage measuring circuits are also connected in parallel to the drain contact of a transistor, wherein the source contact of the transistor 123 is connected to ground potential, and the gate contact of the transistor 123 is connected to ground potential via a resistor 124. The programmable IC also has to comprise a sufficient number of output contacts, e.g. 301, 302, 303, and 304, for controlling a corresponding number of voltage controlling devices.

Of course it would be possible to combine five, six, seven and more cells in a battery in the same way as described above with the example of the four cells.

The process for balancing voltages of the cells may include steps, wherein the programmable IC scans every cell one by one for their voltages. If the programmable IC detects a voltage level of one cell that is lower than the voltage levels of the other cells, then transistors parallel to said other cells will be opened to reduce their voltage to the same level as the one cell with the lower voltage. For example, if it is determined by the programmable IC that cell 250 has a lower voltage level than cell 150, a signal will be output by the programmable IC via output contact 301 such as to open transistor 162 and, thus, reducing the voltage level of cell 150 to the same voltage level than that of cell 250. This process will be repeated until all cells have the same voltage level.

Preferably, the programmable IC will be in sleep mode when the tool is not in use and the battery is not charging, after all cells have been balanced to the same voltage level. Therefore, power redraw of the battery will be reduced by reducing the current to the programmable IC as much as possible. Preferably, every part of the circuitry which can redraw power from the battery pack is switched off by transistors or FETs or other switching components.

As described above, the programmable IC is implemented in the battery pack. In this embodiment, the programmable IC is connected to the programmable IC controlling the tool and both programmable ICs communicate with each other. Therefore, no high-power transistors will be needed in the battery pack and power losses as well as costs may be avoided and reduced, respectively.

In another embodiment of the invention, the programmable IC monitoring the cells of the battery is implemented in the tool itself. In this embodiment of the invention, it is therefore possible to have only one programmable IC in the tool, combining the functionality of the IC controlling the tool and the functionality of the IC monitoring and controlling the battery.

## Claims

1. A battery having a plurality of cells connected in series, each of said cells being connected to a voltage measuring means for measuring a voltage level of said corresponding cell, and a voltage controller means for controlling said voltage level of said corresponding cell,
wherein a controller is connected to said plurality of voltage measuring means and said plurality of voltage controller means such as to balance said measured voltage levels of said cells by respectively controlling said voltage controller means.

2. The battery according to claim 1, **characterized in that** each of said voltage controller means includes an electronic switching device being in an active state during a balancing operation of said cells.

3. The battery according to claim 1 or 2, **characterized in that** each of said voltage controller means comprises a transistor connected to a corresponding cell in parallel and a gate terminal of said transistor connected to said controller.

4. The battery according to claim 3, **characterized in that** the transistor is a metal-oxide field effect transistor.

5. The battery according to claims 1 to 4, **characterized in that** the voltage measuring means comprises a filtering means.

6. The battery according to claim 5, **characterized in that** the filtering means comprises a Zener diode.

7. The battery according to claim 5, **characterized in that** the filtering means comprises a Schottky diode.

8. The battery according to one of the preceding claims, **characterized in that** the controller is a programmable integrated circuit.

9. The battery according to one of the preceding claims, **characterized in that** the controller is a microcontroller.

10. The battery according to one of the preceding claims, **characterized by** the controller being at least partly active during balancing said voltage levels of said cells.

11. The battery according to one of the preceding claims, **characterized in that** the plurality of cells are Li-Ion cells.

12. The battery according to one of the preceding claims, **characterized in that** the controller is included in the battery.

13. A power tool comprising a battery according to one of claims 1 to 12.

14. The power tool according to claim 13, **characterized in that** at least one controller is comprised in the power tool.

15. A method of balancing voltage levels of a plurality of cells of a battery, comprising the steps of
measuring said voltage levels of each of said plurality of cells;
selecting a lowest voltage level of said measured voltage levels; and
controlling a plurality of voltage controller means connected to said cells, respectively, such that said voltage levels of said plurality of cells will be equal to each other.

16. The method according to claim 15, **characterized in that** the voltage levels of said plurality of cells are measured one by one.
